# EUROPEAN PATENT SPECIFICATION

(11) **EP 2 479 456 B1**
(45) Date of publication and mention of the grant of the patent: **15.04.2015**
(21) Application number: 10816861.8
(22) Date of filing: 09.09.2010
(51) Int. Cl.: F16H 1/32, F16C 19/16, F16C 25/06

(54) **ECCENTRIC OSCILLATION GEAR DEVICE AND METHOD FOR PRODUCING ECCENTRIC OSCILLATION GEAR DEVICE**
GETRIEBEVORRICHTUNG MIT EXZENTRISCHER SCHWINGUNG UND VERFAHREN ZUR HERSTELLUNG DER GETRIEBEVORRICHTUNG MIT EXZENTRISCHER SCHWINGUNG
DISPOSITIF À ENGRENAGE À OSCILLATION EXCENTRIQUE ET SON PROCÉDÉ DE FABRICATION

(30) Priority: 16.09.2009 JP 2009214171
(43) Date of publication of application: 25.07.2012
(73) Proprietor: Nabtesco Corporation, Tokyo 102-0093 (JP)
(72) Inventor: KOIKE, Atsushi, Tsu-shi Mie 514-0084 (JP); SHIRATORI, Kenji, Tsu-shi Mie 514-0084 (JP)
(74) Representative: Müller-Boré & Partner Patentanwälte PartG mbB
(86) International application number: PCT/JP2010/005526
(87) International publication number: WO 2011/033746

(56) References cited:
- EP-A2- 0 548 888
- WO-A1-2009/101654
- JP-A- 9 014 359
- JP-A- 2007 182 987
- JP-A- 2008 309 264
- JP-A- 2009 008 271
- JP-A- 2009 014 039
- JP-A- 2009 014 039

## Description

### TECHNICAL FIELD

The present invention relates to an eccentric oscillation gear device and a method for producing the eccentric oscillation gear device.

### BACKGROUND ART

Conventionally, there has been known a gear device for acquiring an output rotation i.e. a rotational speed obtained by reducing the rotational speed to be inputted to a crank shaft at a predetermined rotational speed ratio by oscillating and rotating an externally toothed gear while allowing the externally toothed gear to mesh with internal teeth formed in an inner wall of a casing in association with a rotation of the crank shaft. Such a gear device is disclosed in e.g. patent literature 1.

### CITATION LIST

### PATENT LITERATURE

Patent Literature 1: JP Hei 7-110023A

The gear device disclosed in patent literature 1 is applied to a speed reducer. The gear device reduces the rotational speed of a rotative force to be inputted from a motor, and transmits the rotative force with the reduced rotational speed to a counterpart member (a crank arm). The gear device is provided with a casing, and a machine frame which is mounted in the casing to be rotatable about an axis of the casing. The rotative force of the externally toothed gear is applied to the machine frame. A torque transmission shaft is connected to an axial end of the machine frame to be coaxially aligned with the machine frame. An axial portion of the torque transmission shaft is formed into a small diametrical portion. The small diametrical portion has a smaller diameter than the diameter of a portion of the torque transmission shaft other than the small diametrical portion. A tubular radial load shaft is inserted onto the torque transmission shaft. An end of the torque transmission shaft at a position opposite to the machine frame, and a corresponding end of the radial load shaft are spline-connected to each other. The radial load shaft is connected to the counterpart member. With this arrangement, a rotative force is transmitted from the torque transmission shaft to the counterpart member via the radial load shaft, whereby the counterpart member is driven. Further, there is formed a region where a predetermined gap is formed between the outer circumferential surface of the torque transmission shaft and the inner circumferential surface of the radial load shaft.

In the gear device having the above arrangement, when a rotative force is transmitted from the torque transmission shaft to the counterpart member via the radial load shaft for driving the counterpart member, the radial load shaft may receive a radial load from the counterpart member in a direction perpendicular to the axial direction of the radial load shaft. Transmission of such a radial load to the machine frame may damage the parts in the gear device which are assembled to each other with high precision.

In view of the above, the gear device is so configured as to suppress transmission of a radial load onto the radial load shaft from the counterpart member to the machine frame for preventing damage of the gear device.

Specifically, in the gear device, when the radial load shaft receives a radial load from the counterpart member, the torque transmission shaft is flexed at the small diametrical portion, and the radial load shaft follows the flexure of the torque transmission shaft, while axially sliding, by using the gap, with respect to the torque transmission shaft at the spline connecting portion. Thus, the radial load is absorbed, and transmission of the radial load from the torque transmission shaft to the machine frame is suppressed.

In the above arrangement, however, it is necessary to dispose the radial load shaft between the torque transmission shaft for transmitting a rotative force and the counterpart member in order to prevent damage of the gear device resulting from the radial load. Accordingly, the above arrangement may result in an increase in the number of parts. Further, in the above arrangement, it is necessary to form a small diametrical portion on the torque transmission shaft and to form a spline connecting portion between the radial load shaft and the torque transmission shaft. This makes the structure of the gear device complicated.

WO2009/101654, showing the features of the preamble of claims 1 and 5, discloses an eccentric speed reducer including an input shaft, spur gears, crankshafts, a casing, external gears, a base carrier, an end carrier, struts, pin members and bolt-members. The output shaft including the base carrier and the end carrier is rotatably supported with respect to the casing via a roller bearing and a ball bearing.
EP 0 548 888 discloses an internally meshing planetary gear structure and JP 2009 014039 discloses an eccentric swing type gear device.

### SUMMARY OF INVENTION

An object of the invention is to solve the above problems.

Specifically, an object of the invention is stably rotating the carrier and the transmission shaft in the eccentric oscillation gear device.

An eccentric oscillation gear device according to an aspect of the invention is an eccentric oscillation gear device according to claim 1.

A method for producing an eccentric oscillation gear device according to another aspect of the invention is a method according to claim 5.

### [Summary of the Embodiment]

The following is a summary of the embodiment.

Specifically, the eccentric oscillation gear device of the invention is an eccentric oscillation gear device for rotating a transmission shaft with respect to an outer covering member at a rotational speed obtained by reducing an input rotational speed at a predetermined rotational speed ratio. The eccentric oscillation gear device includes an external cylinder which is connected to the outer covering member and which has an inner surface provided with a plurality of internal teeth; a crank shaft which has an eccentric portion and which rotates about an axis of the crank shaft within the external cylinder by a rotative force being inputted to the crank shaft; an externally toothed gear which is attached to the eccentric portion and which oscillates and rotates in association with an eccentric rotation of the eccentric portion while meshing with the internal teeth; a carrier which is connected to the transmission shaft passing through the outer covering member in an axial direction of the external cylinder and fitted in the external cylinder, and which rotates about an axis of the external cylinder with respect to the external cylinder by receiving a rotative force of the externally toothed gear; and a first carrier bearing which supports the carrier within the external cylinder with respect to the external cylinder so that the carrier is rotatable about the axis of the external cylinder. In this arrangement, the first carrier bearing has a first inner ring portion which is fitted onto the carrier and which is rotatable about the axis of the external cylinder integrally with the carrier, a first outer ring portion which is fitted in the external cylinder and which is rotatable about the axis of the external cylinder integrally with the external cylinder, and a first roll member which is rotatably disposed between the first inner ring portion and the first outer ring portion, the eccentric oscillation gear device further includes a second carrier bearing which supports the carrier within the external cylinder with respect to the external cylinder so that the carrier is rotatable about the axis of the external cylinder. The second carrier bearing has a second inner ring portion which is fitted onto the carrier and which is rotatable about the axis of the external cylinder integrally with the carrier, a second outer ring portion which is fitted in the external cylinder and which is rotatable about the axis of the external cylinder integrally with the external cylinder, and a second roll member which is rotatably disposed between the second inner ring portion and the second outer ring portion. The external cylinder is fixedly mounted to the outer covering member in a state that the external cylinder is coaxially disposed with the outer covering member. The transmission shaft is rotatably supported with respect to the outer covering member by two transmission bearings disposed in the outer covering member, a first gap in which the first roll member is movable in the gap in a radial direction of the external cylinder is formed between the first inner ring portion and the first outer ring portion such that the carrier is movable together with the first inner ring portion in the radial direction of the external cylinder, and a second gap in which the second roll member is movable in a radial direction of the external cylinder is formed between the second inner ring portion and the second outer ring portion such that the carrier is movable together with the second inner ring portion in the radial direction of the external cylinder.

In the eccentric oscillation gear device having the above arrangement, since the carrier bearing for rotatably supporting the carrier in the external cylinder is so constructed that a gap is formed between the inner ring portion and the outer ring portion in which the roll member is movable in the radial direction of the external cylinder, it is possible to move the carrier together with the inner ring portion in the radial direction of the external cylinder. With this arrangement, in the case where the carrier is influenced by a radial load generated in the transmission shaft, the carrier is allowed to move or oscillate in the radial direction of the external cylinder. Accordingly, it is possible to prevent damage of the eccentric oscillation gear device resulting from an influence of a radial load. Further, in the eccentric oscillation gear device, since there is no need of attaching a radial load shaft to the transmission shaft for transmitting the rotative force of the carrier in order to prevent damage resulting from the influence of the radial load, which has been required in the conventional arrangement, it is possible to suppress an increase in the number of parts. Further, in the eccentric oscillation gear device, since there is no need of forming a small diametrical portion on the transmission shaft, or forming a spline connecting portion between the transmission shaft and the radial load shaft, it is possible to prevent complication of the structure of the gear device. Accordingly, in the eccentric oscillation gear device, it is possible to suppress an increase in the number of parts constituting the eccentric oscillation gear device, suppress complication of the structure thereof, and to prevent damage of the eccentric oscillation gear device resulting from an influence of a radial load.

In-the eccentric-oscillation gear device, preferably, the carrier may be coupled to the transmission shaft and rotated together with the transmission shaft.

In the above arrangement, there may be generated a positional displacement between the axis of the carrier and the axis of the transmission shaft in mounting the external cylinder, the carrier bearing, the carrier, the outer covering member, the transmission bearing and the transmission shaft one to the other. In the case where there is generated a positional displacement between the axis of the carrier and the axis of the transmission shaft, an uneven stress may be exerted on one of the portions of the gear device when the carrier and the transmission shaft are integrally rotated. However, in the above arrangement, since the carrier is moved together with the inner ring portion in the radial direction of the external cylinder in such a case, it is possible to prevent exertion of the stress on the gear device. Accordingly, it is possible to prevent damage of the gear device resulting from such a stress. Further, in the above arrangement, since it is possible to prevent exertion of the uneven stress on the gear device, even if there is generated a positional displacement between the axis of the carrier and the axis of the transmission shaft to some extent, the above arrangement allows for rough positioning between the axis of the carrier and the axis of the transmission shaft. Thus, the above arrangement is advantageous in enhancing the workability in mounting the gear device and the counterpart member one to the other.

In the eccentric oscillation gear device, preferably, the first carrier bearing may be an angular ball bearing which is configured in such a manner that the first inner ring portion and the first outer ring portion are operable to support the roll member, formed into a spherical shape, both in the radial direction and an axial direction of the external cylinder. The second carrier bearing may be another angular ball bearing which is configured in such a manner that the second inner ring portion and the second outer ring portion are operable to support the second roll member, formed into a spherical shape, both in the radial direction and an axial direction of the external cylinder.

The carrier bearing may be formed into a tapered roller bearing, wherein the roll member is a roller, and the inner ring portion and the outer ring portion are allowed to support the roller both in the radial direction and the axial direction of the external cylinder. In the case where there is formed a gap in which the roller is movable in the radial direction of the external cylinder between the inner ring portion and the outer ring portion, the roller may rotate, while causing axial runout between the inner ring portion and the outer ring portion when the carrier rotates, with the result that the edge portion of an end of the roller may collide against the inner ring portion or the outer ring portion. As a result, a large stress may be exerted on the edge portion of the roller, and the edge portion may be severely worn out. In contrast, in the above arrangement, since the carrier bearing is an angular ball bearing, and the roll member is formed into a spherical shape, the roller member does not have an edge portion, unlike the above arrangement. Accordingly, even if the roll member may rotate while causing runout between the inner ring portion and the outer ring portion, and collide against the inner ring portion or the outer ring portion, it is possible to reduce wearing of the roll member, as compared with the aforementioned roller.

In the above arrangement, preferably, the first roll member may have such a diameter that the first roll member is movable between the first inner ring portion and the first outer ring portion in the radial direction of the external cylinder. The second roll member may have such a diameter that the second roll member is movable between the second inner ring portion and the second outer ring portion in the radial direction of the external cylinder.

With the above arrangement, it is possible to configure the carrier bearing as an angular ball bearing with a concrete structure that a roll member formed into a spherical shape is movable between the inner ring portion and the outer ring portion in the radial direction of the external cylinder.

A method for producing the eccentric oscillation gear device of the embodiment is a method for producing an eccentric oscillation gear device provided with an external cylinder which is connected to outer covering member and which has an inner surface provided with a plurality of internal teeth, a crank shaft which is disposed in the external cylinder and which has an eccentric portion, an externally toothed gear which is attached to the eccentric portion, a carrier which is connected to a transmission shaft passing through the outer covering member in an axial direction of the external cylinder and fitted in the external cylinder, and a first carrier bearing which supports the carrier within the external cylinder with respect to the external cylinder so that the carrier is rotatable about an axis of the external cylinder, the first carrier bearing including a first inner ring portion which is fitted onto the carrier, a first outer ring portion which is fitted in the external cylinder, and a first roll member which is disposed between the first inner ring portion and the first outer ring portion, the gear device being configured in such a manner that the externally toothed gear oscillates and rotates in association with a rotation of the eccentric portion of the crank shaft while meshing with the internal teeth, and that the carrier rotates with respect to the external cylinder by receiving a rotative force of the externally toothed gear. The method includes a first assembly step for mounting the carrier, the external cylinder and the first carrier bearing one to the other in such a manner that the first carrier bearing is interposed between the carrier and the external cylinder, and a second assembly step for mounting a second carrier bearing which supports the carrier within the external cylinder with respect to the external cylinder so that the carrier is rotatable about the axis of the external cylinder, in such a manner that the second carrier bearing is interposed between the carrier and the external cylinder. The second carrier bearing includes a second inner ring portion which is fitted onto the carrier, a second outer ring portion which is fitted in the external cylinder, and a second roll member which is disposed between the second inner ring portion and the second outer ring portion. The carrier, the external cylinder and the carrier bearing are mounted one to the other in such a manner that the external cylinder is fixedly mounted to the outer covering member in a state that the external cylinder is coaxially disposed with the outer covering member, the transmission shaft is rotatably supported with respect to the outer covering member by two transmission bearings disposed in the outer covering member, a first gap in which the first roll member is movable in a radial direction of the external cylinder is formed between the first inner ring portion and the first outer ring portion in the first assembly step such that the carrier is movable together with the first inner ring portion in the radial direction of the external cylinder, and a second gap in which the second roll member is movable in a radial direction of the external cylinder is formed between the second inner ring portion and the second outer ring portion in the second assembly step such that the carrier is movable-together with the second inner ring portion in the radial direction of the external cylinder.

In the method for producing the eccentric oscillation gear device, since the carrier, the external cylinder and the carrier bearing are mounted to each other in such a state that a pre-pressure is not applied to the carrier bearing in the assembly step, it is possible to form a gap, in which the roll member is movable in the radial direction of the external cylinder, between the inner ring portion and the outer ring portion of the carrier bearing in the assembled eccentric oscillation gear device. Accordingly, in the case where the carrier is influenced by a radial load generated in the transmission shaft, the carrier is allowed to move or oscillate in the radial direction of the external cylinder. Consequently, it is possible to prevent damage of the eccentric oscillation gear device resulting from an influence of a radial load. Further, according to the producing method, it is possible to prevent damage of the eccentric oscillation gear device resulting from an influence of a radial load, without the need of attaching a radial load shaft to the transmission shaft for transmitting the rotative force of the carrier, which has been required in the conventional arrangement. This is advantageous in suppressing an increase in the number of parts. Further, according to the producing method, it is possible to prevent damage of the eccentric oscillation gear device resulting from an influence of a radial load, without the need of forming a small diametrical portion on the transmission shaft, or forming a spline connecting portion between the transmission shaft and the radial load shaft, which has been required in the conventional arrangement. This is advantageous in preventing complication of the structure of the eccentric oscillation gear device. Accordingly, in the producing method, it is possible to suppress an increase in the number of parts constituting the eccentric oscillation gear device, suppress complication of the structure thereof, and to prevent damage of the eccentric oscillation gear device resulting from an influence of a radial load.

As described above, the arrangement of the embodiment is advantageous in suppressing an increase in the number of parts constituting an eccentric oscillation gear device, suppressing complication of the structure thereof, and preventing damage of the eccentric oscillation gear device resulting from an influence of a radial load.

### BRIEF DESCRIPTION OF DRAWINGS

FIG. 1 is a cross-sectional view of an eccentric oscillation gear device according to one embodiment of the present invention along an axial direction of the gear device.
FIG. 2 is a diagram enlargedly showing a one-side carrier bearing and the vicinity thereof in FIG. 1.
FIG. 3 is a diagram enlargedly showing an other-side carrier bearing and the vicinity thereof in FIG. 1.
FIG. 4 is a diagram corresponding to FIG. 3 and showing an other-side carrier bearing and the vicinity thereof in an eccentric oscillation gear device as a modification of the one embodiment of the present invention.

### DESCRIPTION OF EMBODIMENTS

In the following, an embodiment of the invention is described referring to the drawings.

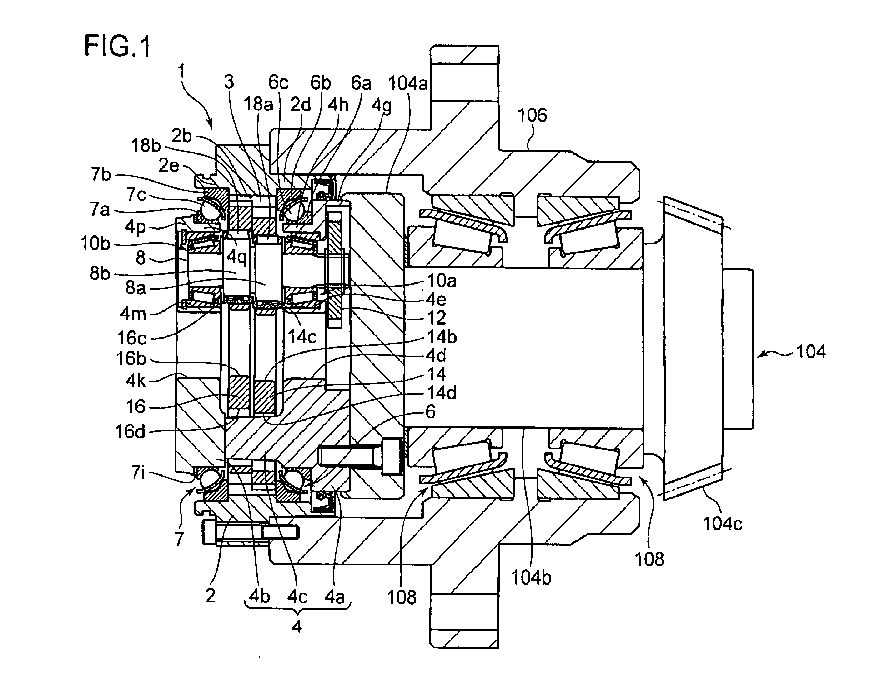

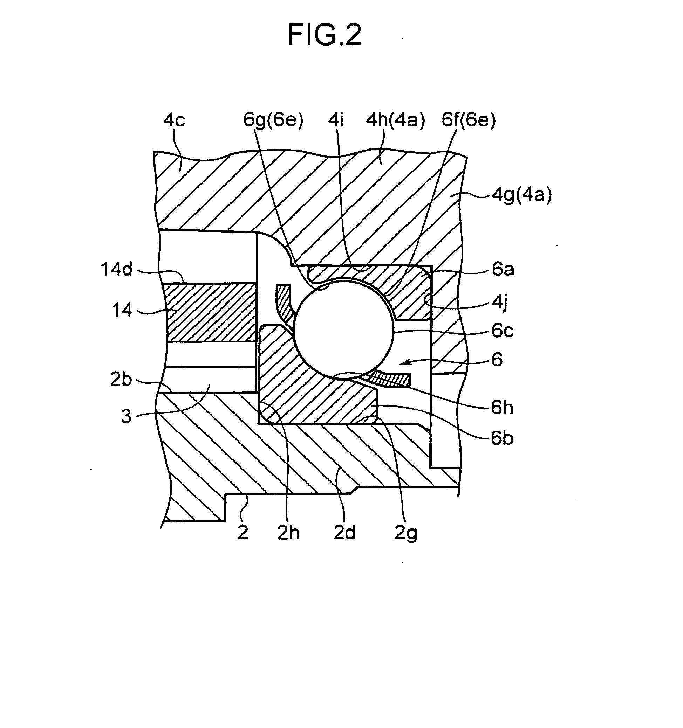

First, an arrangement of an eccentric oscillation gear device according to one embodiment of the present invention is described referring to FIG. 1 and FIG. 2.

The eccentric oscillation gear device 1 (hereinafter, simply called as the gear device 1) according to the present embodiment is applied to a swivel portion such as a swivel barrel or an arm joint of a robot or a swivel portion of various machine tools, as a speed reducer. The gear device 1 reduces an input rotational speed at a predetermined rotational speed ratio (a speed reduction ratio). The gear device 1 rotates a transmission shaft 104 with respect to an outer covering member 106 at the reduced rotational speed. The outer covering member 106 is included in the concept of the first counterpart member in the present invention, and the transmission shaft 104 is included in the concept of the second counterpart member in the present invention.

Specifically, as shown in FIG. 1, the gear device 1 of the present embodiment is mounted on the transmission shaft 104 and the outer covering member 106.

The transmission shaft 104 is disposed to extend along the axial direction of an external cylinder 2 of the gear device 1, which will be described later. As will be described later, the transmission shaft 104 and a carrier 4 of the gear device 1 are integrally rotated. The transmission shaft 104 includes a disc-shaped attachment portion 104a, a linearly extending shaft portion 104b, and a bevel gear 104c. The attachment portion 104a is coaxially formed at one end of the shaft portion 104b, and the bevel gear 104c is coaxially formed at a part of the shaft portion 104b near the other end of the shaft portion 104b. The bevel gear 104c meshes with a gear portion of an unillustrated driven member. A rotative force of the transmission shaft 104 is transmitted from the bevel gear 104c to the driven member.

The outer covering member 106 is formed into a tubular shape. The transmission shaft 104 passes through the outer covering member 106 in the axial direction of the external cylinder 2, and is coaxially disposed with the outer covering member 106. The transmission shaft 104 is rotatably supported with respect to the outer covering member 106 about the axis of the transmission shaft 104 by two transmission bearings 108 disposed in the outer covering member 106. The two transmission bearings 108 rotatably support the shaft portion 104b of the transmission shaft 104 with respect to the outer covering member 106. Further, the two transmission bearings 108 are disposed away from each other in the outer covering member 106 in the axial direction of the transmission shaft 104. A tapered roller bearing, which supports the transmission shaft 104 both in the radial direction and the axial direction of the transmission shaft 104, is used as each of the transmission bearings 108.

The gear device 1 of the present embodiment is provided in such a manner that a rotative force is transmittable between the outer covering member 106 and the transmission shaft 104. The gear device 1 is provided with the external cylinder 2, a plurality of internal tooth pins 3, the carrier 4, a one-side carrier bearing 6, an other-side carrier bearing 7, a spacer 7i, a plurality of crank shafts 8, a first crank bearing 10a, a second crank bearing 10b, transmission gears 12, a first externally toothed gear 14, a second externally toothed gear 16, a first roller bearing 18a, and a second roller bearing 18b. In the gear device 1, the externally toothed gears 14, 16 oscillate and rotate in association with eccentric portions 8a, 8b of the crank shafts 8, which will be described later, while meshing with the internal tooth pins 3. This arrangement allows to acquire an output rotation having a rotational speed obtained by reducing the rotational speed to be inputted to the crank shafts 8 of the gear device 1 at a predetermined rotational speed ratio.

The external cylinder 2 is formed into a generally tubular shape. The external cylinder 2 is fastened to the outer covering member 106 in a state that the external cylinder 2 is coaxially disposed with the outer covering member 106. In this state, the external cylinder 2 is coaxially disposed with the transmission bearings 108 and the transmission shaft 104. Multitudes of pin grooves 2b are formed in the inner circumferential surface of a portion of the external cylinder 2 near the axially central part of the external cylinder 2. Each of the pin grooves 2b extends in the axial direction of the external cylinder 2. These pin grooves 2b are formed in the inner surface of the external cylinder 2 in such a manner that the pin grooves are arranged at even intervals in the circumferential direction of the external cylinder 2.

Further, the external cylinder 2 has a one-side large diametrical portion 2d on which an outer ring portion 6b of the one-side carrier bearing 6 (hereinafter, called as the one-side bearing 6) to be described later is fitted, and an other-side large diametrical portion 2e on which an outer ring portion 7b of an other-side carrier bearing 7 (hereinafter, called as the other-side bearing 7) to be described later is fitted.

The one-side large diametrical portion 2d is disposed on the axial one-end side of the external cylinder 2 with respect to the portion of the external cylinder 2 where the pin grooves 2b are formed. The outer ring portion 6b to be described later is fitted in the one-side large diametrical portion 2d from the axial one-end side toward the axial other-end side of the external cylinder 2. The one-side large diametrical portion 2d has an inner diameter larger than the inner diameter of the portion of the external cylinder 2 where the pin grooves 2b are formed. Specifically, the inner circumferential surface of the one-side large diametrical portion 2d is disposed radially outside with respect to the inner circumferential surface of the portion of the external cylinder 2 where the pin grooves 2b are formed. The inner circumferential surface of the one-side large diametrical portion 2d serves as an outer-circumferential contact surface 2g (see FIG. 2) to be contacted with the outer circumferential surface of the outer ring portion 6b. Further, there is formed a step difference in the radial direction of the external cylinder 2 between the outer-circumferential contact surface 2g and the inner circumferential surface of the portion of the external cylinder 2 where the pin grooves 2b are formed. A one-side end-surface contact surface 2h is formed in such a manner as to connect between an end of the outer-circumferential contact surface 2g and a corresponding end of the inner circumferential surface of the portion of the external cylinder 2 where the pin grooves 2b are formed, which form the step difference. The one-side end-surface contact surface 2h is a surface to be contacted with an end surface of the outer ring portion 6b which faces the axial other-end side of the external cylinder 2, and is disposed perpendicularly to the axial direction of the external cylinder 2.

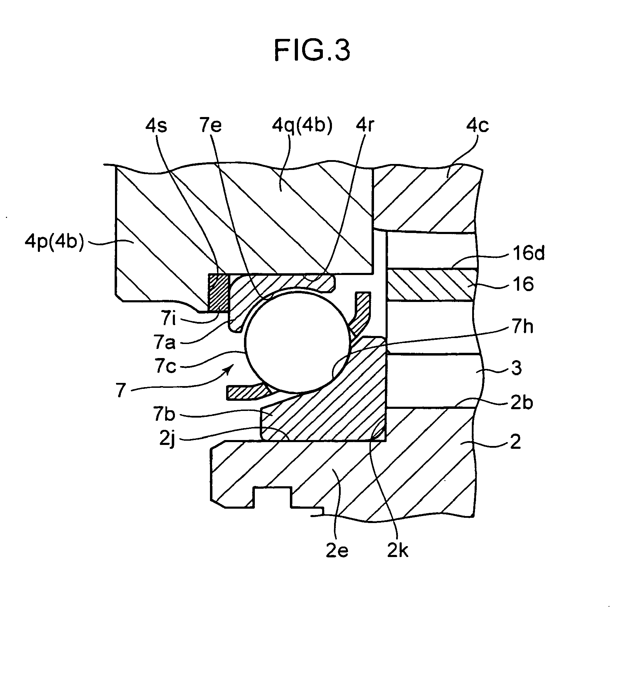

As shown in FIG. 1, the other-side large diametrical portion 2e is disposed on the axial other-end side of the external cylinder 2 with respect to the portion of the external cylinder 2 where the pin grooves 2b are formed. The outer ring portion 7b to be described later is fitted in the other-side large diametrical portion 2e from the axial other-end side of the external cylinder 2 toward the axial one-end side thereof. The other-side large diametrical portion 2e basically has the same arrangement as the one-side large diametrical portion 2d. The other-side large diametrical portion 2e has an inner diameter larger than the inner diameter of the portion of the external cylinder 2 where the pin grooves 2b are formed. The inner circumferential surface of the other-side large diametrical portion 2e serves as an outer-circumferential contact surface 2j (see FIG. 3) to be contacted with the outer circumferential surface of the outer ring portion 7b. Further, an other-side end-surface contact surface 2k to be contacted with an end surface of the outer ring portion 7b which faces the axial one-end side of the external cylinder 2 is formed in such a manner as to connect between the outer-circumferential contact surface 2j and the inner circumferential surface of the portion of the external cylinder 2 where the pin grooves 2b are formed, which form the step difference. The other-side end-surface contact surface 2k is disposed perpendicularly to the axial direction of the external cylinder 2.

Each of the internal tooth pins 3 is fitted in each corresponding one of the pin grooves 2b of the external cylinder 2. Specifically, the plurality of internal tooth pins 3 are provided in the inner surface of the external cylinder 2 in such a manner that the internal tooth pins are placed at even intervals in the circumferential direction of the external cylinder 2. The internal tooth pins 3 are included in the concept of the plurality of internal teeth in the present invention.

As shown in FIG. 1, the carrier 4 is fitted in the external cylinder 2 in a state that the carrier 4 is coaxially disposed with the external cylinder 2. The carrier 4 is connected to the transmission shaft 104. Further, the carrier 4 rotates about the axis of the external cylinder 2 with respect to the external cylinder 2 by receiving the rotative forces of the externally toothed gears 14, 16.

Specifically, the carrier 4 is rotatably supported with respect to the external cylinder 2 by the one-side bearing 6 and the other-side bearing 7 provided in the external cylinder 2. The carrier 4 is provided with a base portion 4a, an end plate portion 4b, and a plurality of shaft portions 4c.

The base portion 4a is formed into a generally disc shape, and is disposed near the axial one end of the external cylinder 2. The base portion 4a has a central-part through-hole 4d which is formed in the radially central part of the base portion 4a, and which passes through the base portion 4a in the axial direction of the external cylinder 2. Further, the base portion 4a has a plurality of crank-shaft attachment holes 4e (hereinafter, simply called as the attachment holes 4e) which are formed in the periphery of the central-part through-hole 4d. The plurality of attachment holes 4e (not shown) are formed around the central-part through-hole 4d in such a manner that the attachment holes 4e are arranged at even intervals in the circumferential direction of the base portion 4a.

The base portion 4a has a large diametrical portion 4g which is formed on the axial one-end side of the external cylinder 2, and a small diametrical portion 4h which is formed on the axial other-end side of the external cylinder 2 with respect to the large diametrical portion 4g.

The large diametrical portion 4g is fitted with and fastened to the attachment portion 104a of the transmission shaft 104 so that the large diametrical portion 4g is coaxially aligned with the attachment portion 104a of the transmission shaft 104. With this arrangement, the carrier 4 is coaxially mounted with respect to the transmission shaft 104, and accordingly, the carrier 4 is coaxially disposed with the outer covering member 106 and the transmission bearing 108.

An inner ring portion 6a of the one-side bearing 6 to be described later is fitted onto the small diametrical portion 4h. The small diametrical portion 4h has an outer diameter smaller than the outer diameter of the large diametrical portion 4g. Specifically, the outer circumferential surface of the small diametrical portion 4h is disposed radially inside with respect to the outer circumferential surface of the large diametrical portion 4g. The outer circumferential surface of the small diametrical portion 4h serves as an inner-circumferential contact surface 4i (see FIG. 2) to be contacted with the inner circumferential surface of the inner ring portion 6a. Further, there is formed a step difference between the inner-circumferential contact surface 4i and the outer circumferential surface of the large diametrical portion 4g in the radial direction of the external cylinder 2. An end-surface contact surface 4j is formed in such a manner as to connect between the end of the inner-circumferential contact surface 4i and the corresponding end of the outer circumferential surface of the large diametrical portion 4g, which form the step difference. The end-surface contact surface 4j is a surface to be contacted with the end surface of the inner ring portion 6a which faces the axial one-end side of the external cylinder 2, and is disposed perpendicularly to the axial direction of the external cylinder 2. There is formed a gap between the end-surface contact surface 4j and the one-side end-surface contact surface 2h of the external cylinder 2 in the axial direction of the external cylinder 2 in a state that the carrier 4 and the external cylinder 2 are mounted to each other. The size of the gap is set to such a value that a pre-pressure is not applied to the one-side bearing 6 in the axial direction of the external cylinder 2.

The end plate portion 4b is formed into a generally disc shape, and as shown in FIG. 1, is arranged at a position away from the base portion 4a in the axial direction of the external cylinder 2. The end plate portion 4b is disposed near the axial other end of the external cylinder 2. The end plate portion 4b has a central-part through-hole 4k which is formed in the radially central part of the end plate portion 4b, and which passes through the end plate portion 4b in the axial direction of the external cylinder 2. Further, the end plate portion 4b is formed with a plurality of crank-shaft attachment holes 4m (hereinafter, simply called as the attachment holes 4m) which are formed in the periphery of the central-part through-hole 4k and which pass through the end plate portion 4b in the axial direction of the external cylinder 2. The plurality of attachment holes 4m (not shown) are formed around the central-part through-holes 4k in such a manner that the attachment holes are arranged at even intervals in the circumferential direction of the end plate portion 4b. Each of the attachment holes 4m is formed at a position where each corresponding one of the attachment holes 4e of the base portion 4a is formed.

The end plate portion 4b has a large diametrical portion 4p which forms the end of the end plate portion 4b which faces the side opposite to the base portion 4a, and a small diametrical portion 4q which is disposed on the side of the base portion 4a with respect to the large diametrical portion 4p and which has a smaller outer diameter than the outer diameter of the large diametrical portion 4p. The arrangement of the small diametrical portion 4q of the end plate portion 4b is basically the same as the arrangement of the small diametrical portion 4h of the base portion 4a. Specifically, the outer circumferential surface of the small diametrical portion 4q of the end plate portion 4b serves as an inner-circumferential contact surface 4r (see FIG. 3) to be contacted with the inner circumferential surface of the inner ring portion 7a. Further, there is formed a step difference in the radial direction of the external cylinder 2 between the inner-circumferential contact surface 4r and the outer circumferential surface of the large diametrical portion 4p. An end-surface opposing surface 4s is formed in such a manner as to connect between the end of the inner-circumferential contact surface 4r and the corresponding end of the outer circumferential surface of the large diametrical portion 4p, which form the step difference. The end-surface opposing surface 4s is disposed opposite to the end surface of the inner ring portion 7a which faces the side opposite to the base portion 4a, and is disposed perpendicularly to the axial direction of the external cylinder 2.

Each of the shaft portions 4c is a portion (see FIG. 1) which connects between the base portion 4a and the end plate portion 4b. The plurality of shaft portions 4c are equidistantly and circumferentially disposed within the external cylinder 2. Each of the shaft portions 4c is integrally formed with the base portion 4a, and extends from the base portion 4a toward the end plate portion 4b along the axial direction of the external cylinder 2. The tip end of each of the shaft portions 4c is fixed to the end plate portion 4b.

The one-side bearing 6 supports the base portion 4a of the carrier 4 within the external cylinder 2 in such a manner that the base potion 4a is rotatable about the axis of the external cylinder 2 with respect to the external cylinder 2.

Specifically, the one-side bearing 6 is provided between the one-side large diametrical portion 2d of the external cylinder 2 and the small diametrical portion 4h of the base portion 4a in such a state that a pre-pressure is not applied to the one-side bearing 6. The one-side bearing 6 is an angular ball bearing. The one-side bearing 6 has the inner ring portion 6a which is rotatable integrally with the base portion 4a about the axis of the external cylinder 2 when the carrier 4 rotates, the outer ring portion 6b which is rotatable integrally with the external cylinder 2 about the axis of the external cylinder 2, and a plurality of roll members 6c which are rotatably disposed between the inner ring portion 6a and the outer ring portion 6b.

The inner ring portion 6a is fitted onto the small diametrical portion 4h of the base portion 4a. The inner circumferential surface of the inner ring portion 6a is firmly contacted with the inner-circumferential contact surface 4i (see FIG. 2) of the small diametrical portion 4h. The inner ring portion 6a has a curved surface 6e which is formed in the outer circumferential surface of the inner ring portion 6a, and which is curved into a concave shape in cross section along the axial direction of the inner ring portion 6a. The curved shape of the curved surface 6e in cross section is an arc shape. Specifically, the curved surface 6e is formed into such a shape that the roll member 6c, which is formed into a spherical shape to be described later, is allowed to fit in. The curved surface 6e has its diameter gradually increased, as the curved surface 6e extends toward the axial one-end side of the external cylinder 2. The curved surface 6e has a one-side diameter-increasing surface portion 6f which covers a region from a top of the outer surface of the roll member 6c located radially inside of the external cylinder 2 to a position near a top of the outer surface of the roll member 6c located on the axial one-end side of the external cylinder 2, and an other-side diameter-increasing surface portion 6g whose diameter slightly increases from the one-side diameter-increasing surface portion 6f toward the axial other-end side of the external cylinder 2. The curved surface 6e having the above arrangement is operable to support the region of the outer surface of the roll member 6c from the position near the top located radially inside of the external cylinder 2 to the position near the top located on the axial one-end side of the external cylinder 2.

The outer ring portion 6b is fitted in the one-side large diametrical portion 2d of the external cylinder 2. The outer circumferential surface of the outer ring portion 6b is firmly contacted with the outer-circumferential contact surface 2g of the one-side large diametrical portion 2d. The outer ring portion 6b has a curved surface 6h which is formed in the inner circumferential surface of the outer ring portion 6b, and which is curved into a concave shape in cross section along the axial direction of the outer ring portion 6b. The curved shape of the curved surface 6h in cross section is an arc shape. Specifically, the curved surface 6h is formed into such a shape that the roll member 6c, which is formed into a spherical shape to be described later, is allowed to fit in. The curved surface 6h has its diameter gradually increased, as the curved surface 6h extends toward the axial other-end side of the external cylinder 2. The curved surface 6h is operable to support a region from a top of the outer surface of the roll member 6c located radially outside of the external cylinder 2 to a top of the outer surface of the roll member 6c located on the axial other-end side of the external cylinder 2.

Each of the plurality of roll members 6c is formed into a spherical shape. The plurality of roll members 6c are disposed along the circumferential direction of the one-side bearing 6 between the curved surface 6e of the inner ring portion 6a and the curved surface 6h of the outer ring portion 6b. The plurality of roll members 6c are operable to be supported both in the radial direction and the axial direction of the external cylinder 2 by the curved surfaces 6e, 6h. Each of the roll members 6c formed into a spherical shape has such a diameter as to be movable in the radial direction of the external cylinder 2 between the curved surface 6e of the inner ring portion 6a and the curved surface 6h of the outer ring portion 6b. Specifically, the roll member 6c of the present embodiment is a member having a smaller diameter than the diameter of a spherical member that is held between the curved surface 6e of the inner ring portion 6a and the curved surface 6h of the outer ring portion 6b without a gap. With this arrangement, the gap formed between the curved surface 6e of the inner ring portion 6a and the curved surface 6h of the outer ring portion 6b is configured to such a gap that the roll member 6c is movable in the radial direction of the external cylinder 2. With the formation of the gap between the curved surface 6e of the inner ring portion 6a and the curved surface 6h of the outer ring portion 6b, the carrier 4 and the inner ring portion 6b are integrally movable radially outward.

The one-side bearing 6 having the above arrangement is operable to support the base portion 4a (the carrier 4) both in the radial direction and the axial direction (a thrust direction) of the external cylinder 2 in the region where the roll members 6c are interposed between the inner ring portion 6a and the outer ring portion 6b, for instance, in the case where the carrier 4 and the inner ring portion 6a are integrally moved radially outward, and the roll members 6c are interposed between the inner ring portion 6a and the outer ring portion 6b without a gap on the displaced side.

The other-side bearing 7 rotatably supports the end plate portion 4b of the carrier 4 within the external cylinder 2 about the axis of the external cylinder 2 with respect to the external cylinder 2.

Specifically, the other-side bearing 7 is provided between the other-side large diametrical portion 2e of the external cylinder 2 and the small diametrical portion 4q of the end plate portion 4b in a state that a pre-pressure is not applied to the other-side bearing. The other-side bearing 7 is an angular ball bearing as well as the one-side bearing 6, and is symmetrically disposed with respect to the one-side bearing 6 in the axial direction of the external cylinder 2. The other-side bearing 7 has an inner ring portion 7a, an outer ring portion 7b and roll members 7c substantially having the same arrangement as the inner ring portion 6a, the outer ring portion 6b and the roll members 6c of the one-side bearing 6. The inner ring portion 7a is fitted onto the small diametrical portion 4q of the end plate portion 4b, and the outer ring portion 7b is fitted in the other-side large diametrical portion 2e of the external cylinder 2. The inner ring portion 7a rotates integrally with the end plate portion 4b about the axis of the external cylinder 2 when the carrier 4 rotates, and the outer ring portion 7b rotates integrally with the external cylinder 2 about the axis of the external cylinder 2. The inner ring portion 7a has a curved surface 7e substantially having the same arrangement as the curved surface 6e of the inner ring portion 6a, and the outer ring portion 7b has a curved surface 7h substantially the same arrangement as the curved surface 6h of the inner ring portion 6b. The curved surface 7e of the inner ring portion 7a of the other-side bearing 7 is symmetrically disposed with respect to the curved surface 6e of the inner ring portion 6a of the one-side bearing 6, and the curved surface 7h of the outer ring portion 7b is symmetrically disposed with respect to the curved surface 6h of the outer ring portion 6b of the one-side bearing 6.

The spacer 7i is interposed between the end surface of the inner ring portion 7a which faces the side opposite to the base portion 4a (see FIG. 1), and the end-surface opposing surface 4s of the end plate portion 4b. The spacer 7i is formed into an annular shape, and is fitted onto the small diametrical portion 4q of the end plate portion 4b. The spacer 7i is a member having such a thickness that a pre-pressure is not applied to the other-side bearing 7 in the axial direction of the external cylinder 2 in a state that the spacer 7i is interposed between the end surface of the inner ring portion 7a which faces the side opposite to the base portion 4a, and the end-surface opposing surface 4s.

The plurality of crank shafts 8 are provided within the external cylinder 2. In FIG. 1, one of the plurality of crank shafts 8 is shown. Each of the crank shafts 8 is inserted in each the corresponding one of the attachment holes 4e of the base portion 4a, and in each corresponding one of the attachment holes 4m of the end plate portion 4b. With this arrangement, the crank shafts 8 are equidistantly and circumferentially disposed within the external cylinder 2.

A portion of each of the crank shafts 8, which is located at a position axially inward with respect to the axial one end thereof by a predetermined distance, is mounted in each corresponding one of the attachment holes 4e of the base portion 4a via a first crank bearing 10a, and the axial other end of each of the crank shafts 8 is mounted in each corresponding one of the attachment holes 4m of the end plate portion 4b via a second crank bearing 10b. Specifically, each of the crank shafts 8 is rotatably supported by the corresponding crank bearings 10a, 10b about the axis of each of the crank shafts 8 with respect to the carrier 4.

Each of the crank shafts 8 has a first eccentric portion 8a and a second eccentric portion 8b. The first eccentric portion 8a and the second eccentric portion 8b are formed at portions of the crank shaft 8 between the portions of the crank shaft 8 which are respectively supported by the crank bearings 10a, 10b; and are disposed side by side in the axial direction of the crank shaft 8. The first eccentric portion 8a and the second eccentric portion 8b each is formed into a columnar shape, and is displaced from the axis of the corresponding crank shaft 8 by a predetermined displacement amount. The first eccentric portion 8a and the second eccentric portion 8b are disposed to be displaced from each other by an angle corresponding to a predetermined phase difference. Further, the one end of the crank shaft 8 extends to the side opposite to the end plate portion 4b through the corresponding attachment hole 4e, and the transmission gear 12 is provided at the one end of the crank shaft 8. An unillustrated input shaft extending in the axial direction of the external cylinder 2 is inserted in the central-part through-hole 4d of the base portion 4a, the central-part through-hole 4k of the end plate portion 4b and central-part through-holes 14b, 16b of the externally toothed gears 14, 16 to be described later from the side opposite to the transmission shaft 104, and an unillustrated input gear provided at the tip end of the input shaft meshes with the transmission gear 12. With this arrangement, a rotative force transmitted from an unillustrated motor to the input shaft is transmitted to each of the crank shafts 8 via the input gear and the transmission gear 12.

The first externally toothed gear 14 and the second externally toothed gear 16 are disposed side by side in the axial direction of the external cylinder 2 in a space within the external cylinder 2 between the base portion 4a and the end plate portion 4b.

The first externally toothed gear 14 is formed with the central-part through-hole 14b, a plurality of first eccentric portion attachment holes 14c, and a plurality of shaft portion insertion holes 14d.

The central-part through-hole 14b is formed in the radially central part of the first externally toothed gear 14. The unillustrated input shaft is inserted in the central-part through-hole 14b. The plurality of first eccentric portion attachment holes 14c are equidistantly and circumferentially formed in a portion of the first externally toothed gear 14 around the central-part through-hole 14b. The first eccentric portion 8a of the corresponding crank shaft 8 is fitted in each of the first eccentric portion attachment holes 14c via the first roller bearing 18a. Specifically, the first externally toothed gear 14 is attached to the first eccentric portion 8a of each of the crank shafts 8 via the first roller bearing 18a. The first externally toothed gear 14 oscillates and rotates in association with the eccentric rotation of the first eccentric portion 8a in a state that the external teeth of the first externally toothed gear 14 mesh with the internal tooth pins 3. Each of the shaft portion insertion holes 14d is formed in a portion of the first externally toothed gear 14 around the central-part through-hole 14b, and between the first eccentric portion attachment holes 14c. Each corresponding one of the shaft portions 4c is inserted in each of the shaft portion insertion holes 14d with a play.

The second externally toothed gear 16 has substantially the same structure as the first externally toothed gear 14. Specifically, the second externally toothed gear 16 is formed with the central-part through-hole 16b, a plurality of second eccentric portion attachment holes 16c, and a plurality of shaft portion insertion holes 16d. The second externally toothed gear 16 is attached to the second eccentric portion 8b of each of the crank shafts 8 via the second roller bearing 18b. The second externally toothed gear 16 oscillates and rotates in association with the eccentric rotation of the second eccentric portion 8b in a state that the external teeth of the second externally toothed gear 16 mesh with the internal tooth pins 3. Each corresponding one of the shaft portions 4c is inserted in each of the shaft portion insertion holes 16d of the second externally toothed gear 16 with a play.

Next, an operation of the gear device 1 according to the present embodiment is described.

Firstly, when the unillustrated drive motor is driven, the unillustrated input shaft rotates by the driving force of the drive motor. The rotative force of the input shaft is inputted from the gear portion of the input shaft to each of the crank shafts 8 via each of the transmission gears 12. With this operation, each of the crank shafts 8 rotates about the axis of each of the crank shafts 8 within the external cylinder 2.

Then, as each of the crank shafts 8 rotates, the first eccentric portion 8a and the second eccentric portion 8b of each of the crank shafts 8 eccentrically rotates. The first externally toothed gear 14 oscillates and rotates in association with the eccentric rotation of the first eccentric portions 8a while meshing with the internal tooth pins 3, and the second externally toothed gear 16 oscillates and rotates in association with the eccentric rotation of the second eccentric portions 8b while meshing with the internal tooth pins 3. The rotative forces of the first externally toothed gear 14 and the second externally toothed gear 16 are applied to each of the shaft portions 4c of the carrier 4. With this operation, the carrier 4 rotates about the axis of the external cylinder 2 with respect to the external cylinder 2 at a rotational speed obtained by reducing the rotational speed of the input shaft at a predetermined rotational speed ratio. As the carrier 4 rotates, the transmission shaft 104 rotates integrally with the carrier 4. The rotative force of the transmission shaft 104 is transmitted to the gear portion of the driven member from the bevel gear 104c, whereby the driven member is driven.

As the driven member is driven, a radial load may be exerted on the transmission shaft 104 from the driven member, and the carrier 4 may radially move or oscillate resulting from the radial load exerted on the transmission shaft 104. In such a case, the radial movement or the oscillation of the carrier 4 is absorbed by the gap formed between the inner ring portion 6a and the outer ring portion 6b of the one-side bearing 6, and by the gap formed between the inner ring portion 7a and the outer ring portion 7b of the other-side bearing 7.

Next, a method for producing the gear device 1 according to the present embodiment is described.

Firstly, the outer ring portion 6b of the one-side bearing 6 is fitted in the one-side large diametrical portion 2d along the axial direction of the external cylinder 2 from the axial one end of the external cylinder 2. In performing this operation, the outer ring portion 6b is fitted in the one-side large diametrical portion 2d to such a position that the outer ring portion 6b is contacted with the one-side end-surface contact surface 2h of the external cylinder 2.

Then, the inner ring portion 6a of the one-side bearing 6 is fitted onto the small diametrical portion 4h of the base portion 4a of the carrier 4. In performing this operation, the inner ring portion 6a is inserted onto the small diametrical portion 4h to such a position that the inner ring portion 6a is contacted with the end-surface contact surface 4j of the base portion 4a.

Then, the plurality of roll members 6c are disposed to be aligned circumferentially between the curved surface 6h of the outer ring portion 6b and the curved surface 6e of the inner ring portion 6a, and the base portion 4a and the external cylinder 2 are mounted to each other so that the shaft portions 4c are fitted in the external cylinder 2 in this state. In performing this operation, the base portion 4a and the external cylinder 2 are mounted to each other in such a manner that a pre-pressure is not applied to the one-side bearing 6 in the axial direction of the external cylinder 2.

Thereafter, the constituent elements such as the internal tooth pins 3, the crank shafts 8, the first crank bearing 10a, the externally toothed gears 14, 16 and the roller bearings 18a, 18b are assembled to each other in the external cylinder 2.

Then, the outer ring portion 7b of the other-side bearing 7 is fitted in the other-side large diametrical portion 2e along the axial direction of the external cylinder 2 from the axial other end of the external cylinder 2. In performing this operation, the outer ring portion 7b is fitted in the other-side large diametrical portion 2e to such a position that the outer ring portion 7b is contacted with the other-side end-surface contact surface 2k of the external cylinder 2.

Then, the spacer 7i is inserted onto the small diametrical portion 4q of the end plate portion 4b of the carrier 4, and thereafter, the inner ring portion 7a of the other-side bearing 7 is fitted onto the small diametrical portion 4q. In performing this operation, the inner ring portion 7a is inserted onto the small diametrical portion 4q to such a position that the spacer 7i is pressed against the end-surface opposing surface 4s of the end plate portion 4b by the inner ring portion 7a.

Then, the plurality of roll members 7c are disposed to be aligned circumferentially between the curved surface 7h of the outer ring portion 7b and the curved surface 7e of the inner ring portion 7a, and in this state, the end plate portion 4b is connected to the tip end of each of the shaft portions 4c and mounted on the external cylinder 2. In performing this operation, the end plate portion 4b is mounted on the external cylinder 2 in such a manner that a pre-pressure is not applied to the other-side bearing 7 in the axial direction of the external cylinder 2.

Thereafter, the second roller bearing 10b is interposed between each of the crank shafts 8 and the inner surface of the corresponding attachment hole 4m of the end plate portion 4b.

Finally, the external cylinder 2 is coaxially mounted on the outer covering member 106, and the base portion 4a of the carrier 4 is coaxially mounted on the transmission shaft 104. In performing this operation, the axes of the carrier 4 and the transmission shaft 102 are aligned with each other.

As described above, in this embodiment, the carrier bearing 6, 7 is so constructed that a gap is formed between the inner ring portion 6a, 7a, and the outer ring portion 6b, 7b in which the roll member 6c, 7c is movable in the radial direction of the external cylinder 2. Accordingly, the carrier 4 is movable together with the inner ring portion 6a, 7a in the radial direction of the external cylinder 2. With this arrangement, in the case where an influence of a radial load is exerted on the carrier 4 through the transmission shaft 104, the carrier 4 is allowed to move or oscillate in the radial direction of the external cylinder 2. Consequently, it is possible to prevent damage of the gear device 1 resulting from the influence of the radial load. Further, in this embodiment, there is no need of attaching a radial load shaft to the transmission shaft 104 for transmitting the rotative force of the carrier 4 in order to prevent damage of the gear device 1 resulting from an influence of a radial load, which has been required in the conventional art. This is advantageous in suppressing an increase in the number of parts. Further, in this embodiment, there is no need of forming a small diametrical portion on the transmission shaft 104, or forming a spline connecting portion between the transmission shaft 104 and the radial load shaft, which has been required in the conventional arrangement. This is advantageous in preventing complication of the structure of the gear device 1. Accordingly, in this embodiment, it is possible to suppress an increase in the number of parts constituting the gear device 1, suppress complication of the structure thereof, and to prevent damage of the gear device 1 resulting from an influence of a radial load.

Further, in this embodiment, even in the case where there is a positional displacement between the axis of the carrier 4 and the axis of the transmission shaft 104, the carrier 4 is moved together with the inner ring portion 6a, 7a of the carrier bearing 6, 7 in the radial direction of the external cylinder 2 so that application of an uneven stress to the gear device 1 is prevented when the transmission shaft 104 rotates together with the carrier 4. Accordingly, it is possible to prevent damage of the gear device 1 resulting from such a stress. Further, in this embodiment, even if there is a slight positional displacement between the axis of the carrier 4 and the axis of the transmission shaft 104, it is possible to prevent application of the uneven stress to the gear device 1 as described above. This allows for rough positioning between the axis of the carrier 4 and the axis of the transmission shaft 104. Thus, the above arrangement is advantageous in enhancing the workability in mounting the gear device 1, the transmission shaft 104, the outer covering member 106 and the transmission bearing 108 one to the other.

Further, in this embodiment, the one-side bearing 6 and the other-side bearing 7 for rotatably supporting the carrier 4 are angular ball bearings. In the case where the bearing 6, 7 is configured into a tapered roller bearing, a roller as a roll member may rotate, while causing axial runout between the inner ring portion and the outer ring portion, with the result that the edge portion of an end of the roller may be severely worn out. However, the bearing 6, 7 in this embodiment is configured in such a manner that the roll member 6c, 7c is formed into a spherical shape with no formation of an edge portion, unlike the aforementioned roller. Accordingly, in this embodiment, even if the roll member 6c, 7c may rotate while causing runout between the inner ring portion 6a, 7a and the outer ring portion 6b, 7b, and may collide against the inner ring portion 6a, 7a or the outer ring portion 6b, 7b, it is possible to reduce wearing of the roll member, as compared with the aforementioned roller.

It should be noted that the embodiment disclosed herein is described by way of example in every respect but not by way of limitation. It is to be understood that the scope of the present invention is not defined by the above embodiment but by the appended claims. Further, the scope of the present invention embraces all modifications within the meaning and scope equivalent to the appended claims.

For instance, the inner ring portion 6a, 7a of the carrier bearing 6, 7 may be integrally formed with the carrier 4. Specifically, the inner ring portion 6a may be integrally formed with the base portion 4a of the carrier 4, and the inner ring portion 7a may be integrally formed with the end plate portion 4b of the carrier 4.

Further alternatively, the outer ring portion 6b, 7b of the carrier bearing 6, 7 may be integrally formed with the external cylinder 2.

Further, the carrier bearing 6, 7 is not limited to an angular ball bearing, but may be a bi-directional bearing which is so configured that the carrier 4 is allowed to be supported both in the radial direction and the axial direction (a thrust direction) of the external cylinder 2. For example, the carrier bearing 6, 7 may be a tapered roller bearing, etc.

Further alternatively, the inner ring portion 7a and the outer ring portion 7b of the other-side bearing 7 may be disposed to be displaced away from each other in the axial direction of the external cylinder 2, whereby a gap in which the roll member 7c is movable in the radial direction of the external cylinder 2 is formed between the inner ring portion 7a and the other ring portion 7b, in place of using the spherical roll member 7c of the other-side bearing 7 formed into a spherical shape with a small diameter.

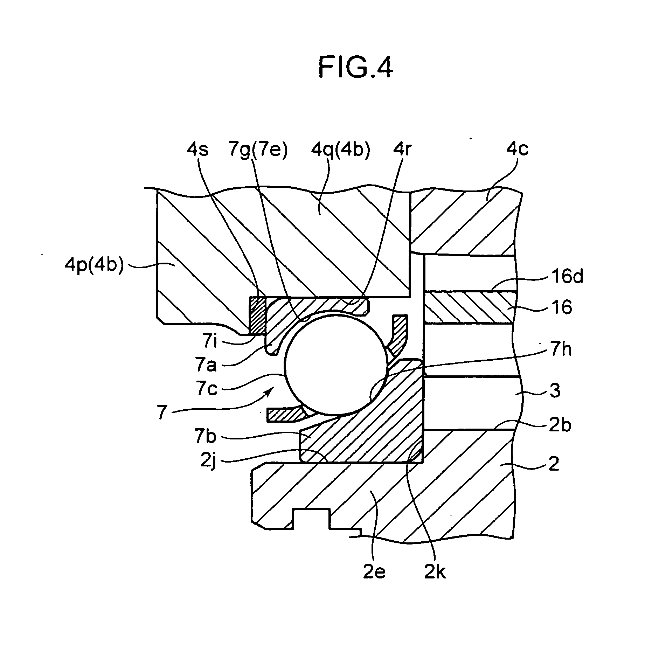

Specifically, FIG. 4 shows an arrangement of the modification as described above. In the modification, the diameter of a curved surface 7h of an outer ring portion 7b gradually increases, as the curved surface 7h extends toward the axial one-end side of the external cylinder 2. The curved surface 7h is included in the concept of the inner circumferential surface of the outer ring portion in the present invention. Further, a curved surface 7e of an inner ring portion 7a has a diameter-increasing surface portion 7g whose diameter gradually increases, as the diameter-increasing surface portion 7g extends toward the axial other-end side of the external cylinder 2. The diameter-increasing surface portion 7g is included in the concept of the outer circumferential surface of the inner ring portion in the present invention. The inner ring portion 7a is disposed at a position displaced toward the axial other-end side of the external cylinder 2 with respect to a position where the spherical roll member 7c is allowed to be held between the diameter-increasing surface portion 7g and the curved surface 7h of the outer ring portion 7b. Specifically, with use of a spacer 7i which is interposed between the inner ring portion 7a and an end-surface opposing surface 4s of an end plate portion 4b and which has a smaller thickness than the thickness of the spacer 7i used in the embodiment, the inner ring portion 7a comes closer to the axial other-end side of the external cylinder 2, whereby the inner ring portion 7a is disposed at a position displaced toward the axial other-end side of the external cylinder 2.

As described above, disposing the inner ring portion 7a at a position displaced toward the axial other-end side of the external cylinder 2 increases the size of the gap between the diameter-increasing surface portion 7g of the inner ring portion 7a and the curved surface 7h of the outer ring portion 7b in the radial direction of the external cylinder 2. Consequently, it is possible to move the spherical roll member 7c between the inner ring portion 7a and the outer ring portion 7b in the radial direction of the external cylinder 2.

Similarly to the other-side bearing 7, the one-side bearing 6 may be configured in such a manner that the roll member 6c is movable between the inner ring portion 6a and the outer ring portion 6b in the radial direction of the external cylinder 2 by disposing the inner ring portion 6a toward the axial one-end side of the external cylinder 2, in place of using the roll member 6c formed into a shape with a small diameter.

Further alternatively, at least one of the inner ring portion 6a (7a) and the outer ring portion 6b (7b) may be formed to have a small thickness in the radial direction of the external cylinder 2, whereby a gap in which the roll member 6c (7c) is movable in the radial direction of the external cylinder 2 is formed between the inner ring portion 6a (7a) and the outer ring portion 6b (7b).

Further alternatively, a spacer which has substantially the same arrangement as the spacer 7i may be provided on the side of the one-side bearing 6.

Further alternatively, a spacer may be disposed between the one-side end-surface contact surface 2h of the external cylinder 2 and the outer ring portion 6b of the one-side bearing 6, and/or between the other-side end-surface contact surface 2k of the external cylinder 2 and the outer ring portion 7b of the other-side bearing 7.

Further alternatively, one or more than two externally toothed gears may be provided in the external cylinder 2.

## Claims

1. An eccentric oscillation gear device (1) for rotating a transmission shaft (104) with respect to an outer covering member (106) at a rotational speed obtained by reducing an input rotational speed at a predetermined rotational speed ratio, comprising:
an external cylinder (2) which is connected to the outer covering member (106) and which has an inner surface provided with a plurality of internal teeth (3);
a crank shaft (8) which has an eccentric portion (8a, 8b) and which rotates about an axis of the crank shaft (8) within the external cylinder (2) by a rotative force being inputted to the crank shaft (8);
an externally toothed gear (14, 16) which is attached to the eccentric portion (8a, 8b) and which oscillates and rotates in association with an eccentric rotation of the eccentric portion (8a, 8b) while meshing with the internal teeth (3);
a carrier (4) which is connected to the transmission shaft (104) passing through the outer covering member in an axial direction of the external cylinder (2) and fitted in the external cylinder (2), and which rotates about an axis of the external cylinder (2) with respect to the external cylinder (2) by receiving a rotative force of the externally toothed gear (14, 16); and
a first carrier bearing (7) which supports the carrier (4) within the external cylinder (2) with respect to the external cylinder (2) so that the carrier (4) is rotatable about the axis of the external cylinder (2), wherein
the first carrier bearing (7) has a first inner ring portion (7a) which is fitted onto the carrier (4) and which is rotatable about the axis of the external cylinder (2) integrally with the carrier (4), a first outer ring portion (7b) which is fitted in the external cylinder (2) and which is rotatable about the axis of the external cylinder (2) integrally with the external cylinder (2), and a first roll member (7c) which is rotatably disposed between the first inner ring portion (7a) and the first outer ring portion (7b),
**characterized in that** the eccentric oscillation gear device (1) further comprises a second carrier bearing (6) which supports the carrier (4) within the external cylinder (2) with respect to the external cylinder (2) so that the carrier (4) is rotatable about the axis of the external cylinder (2), wherein
the second carrier bearing (6) has a second inner ring portion (6a) which is fitted onto the carrier (4) and which is rotatable about the axis of the external cylinder (2) integrally with the carrier (4), a second outer ring portion (6b) which is fitted in the external cylinder (2) and which is rotatable about the axis of the external cylinder (2) integrally with the external cylinder (2), and a second roll member (6c) which is rotatably disposed between the second inner ring portion (6a) and the second outer ring portion (6b),
the external cylinder (2) is fixedly mounted to the outer covering member (106) in a state that the external cylinder (2) is coaxially disposed with the outer covering member (106),
the transmission shaft (104) is rotatably supported with respect to the outer covering member (106) by two transmission bearings (108) disposed in the outer covering member (106),
a first gap in which the first roll member (7c) is movable in a radial direction of the external cylinder (2) is formed between the first inner ring portion (7a) and the first outer ring portion (7b) such that the carrier (4) is movable together with the first inner ring portion (7a) in the radial direction of the external cylinder (2), and
a second gap in which the second roll member (6c) is movable in a radial direction of the external cylinder (2) is formed between the second inner ring portion (6a) and the second outer ring portion (6b) such that the carrier (4) is movable together with the second inner ring portion (6a) in the radial direction of the external cylinder (2).

2. The eccentric oscillation gear device (1) according to claim 1, wherein
the carrier (4) is coupled to the transmission shaft (104) and rotated together with the transmission shaft (104).

3. The eccentric oscillation gear device (1) according to claim 1 or 2, wherein the first carrier bearing (7) is an angular ball bearing which is configured in such a manner that the first inner ring portion (7a) and the first outer ring portion (7b) are operable to support the first roll member (7c), formed into a spherical shape, both in the radial direction and an axial direction of the external cylinder (2), and
the second carrier bearing (6) is another angular ball bearing which is configured in such a manner that the second inner ring portion (6a) and the second outer ring portion (6b) are operable to support the second roll member (6c), formed into a spherical shape, both in the radial direction and an axial direction of the external cylinder (2).

4. The eccentric oscillation gear device (1) according to claim 3, wherein the first roll member (7c) has such a diameter that the first roll member (7c) is movable between the first inner ring portion (7a) and the first outer ring portion (7b) in the radial direction of the external cylinder (2), and
the second roll member (6c) has such a diameter that the second roll member (6c) is movable between the second inner ring portion (6a) and the second outer ring portion (6b) in the radial direction of the external cylinder (2).

5. A method for producing an eccentric oscillation gear device (1) provided with an external cylinder (2) which is connected to an outer covering member (106) and which has an inner surface provided with a plurality of internal teeth (3), a crank shaft (8) which is disposed in the external cylinder (2) and which has an eccentric portion (8a, 8b), an externally toothed gear (14, 16) which is attached to the eccentric portion (8a, 8b), a carrier (4) which is connected to a transmission shaft (104) passing through the outer covering member in an axial direction of the external cylinder (2) and fitted in the external cylinder (2), and a first carrier bearing (7) which supports the carrier (4) within the external cylinder (2) with respect to the external cylinder (2) so that the carrier (4) is rotatable about an axis of the external cylinder (2), the first carrier bearing (7) including a first inner ring portion (7a) which is fitted onto the carrier (4), a first outer ring portion (7b) which is fitted in the external cylinder (2), and a first roll member (7c) which is disposed between the first inner ring portion (7a) and the first outer ring portion (7b), the gear device being configured in such a manner that the externally toothed gear (14, 16) oscillates and rotates in association with a rotation of the eccentric portion (8a, 8b) of the crank shaft (8) while meshing with the internal teeth (3), and that the carrier (4) rotates with respect to the external cylinder (2) by receiving a rotative force of the externally toothed gear (14, 16), the method comprising:
a first assembly step for mounting the carrier (4), the external cylinder (2) and the first carrier bearing (7) one to the other in such a manner that the first carrier bearing (7) is interposed between the carrier (4) and the external cylinder (2),
**characterized by**
a second assembly step for mounting a second carrier bearing (6) which supports the carrier (4) within the external cylinder (2) with respect to the external cylinder (2) so that the carrier (4) is rotatable about the axis of the external cylinder (2), in such a manner that the second carrier bearing (6) is interposed between the carrier (4) and the external cylinder (2),
wherein
the second carrier bearing (6) includes a second inner ring portion (6a) which is fitted onto the carrier (4), a second outer ring portion (6b) which is fitted in the external cylinder (2), and a second roll member (6c) which is disposed between the second inner ring portion (6a) and the second outer ring portion (6b),
the carrier (4), the external cylinder (2) and the carrier bearing (6, 7) are mounted one to the other in such a manner that the external cylinder (2) is fixedly mounted to the outer covering member (106) in a state that the external cylinder (2) is coaxially disposed with the outer covering member (106),
the transmission shaft (104) is rotatabley supported with respect to the outer covering member (106) by two transmission bearings (108) disposed in the outer covering member (106),
a first gap in which the first roll member (7c) is movable in a radial direction of the external cylinder (2) is formed between the first inner ring portion (7a) and the first outer ring portion (7b) in the first assembly step such that the carrier (4) is movable together with the first inner ring portion (7a) in the radial direction of the external cylinder (2), and
a second gap in which the second roll member (6c) is movable in a radial direction of the external cylinder (2) is formed between the second inner ring portion (6a) and the second outer ring portion (6b) in the second assembly step such that the carrier (4) is movable together with the second inner ring portion (6a) in the radial direction of the external cylinder (2).

## Patentansprüche

1. Getriebevorrichtung mit exzentrischer Schwingung (1) zum Drehen einer Getriebewelle (104) in Bezug auf ein äußeres Abdeckelement (106) mit einer Drehzahl, die erhalten wird, indem eine Eingangsdrehzahl mit einem vorgegebenen Drehzahlverhältnis verringert wird, die umfasst:
einen äußeren Zylinder (2), der mit dem äußeren Abdeckelement (106) verbunden ist und der eine Innenoberfläche hat, die mit mehreren Innenzähnen (3) versehen ist;
eine Kurbelwelle (8), die einen exzentrischen Abschnitt (8a, 8b) hat und die sich durch eine Drehkraft, die in die Kurbelwelle (8) eingespeist wird, um eine Achse der Kurbelwelle (8) innerhalb des äußeren Zylinders (2) dreht;
ein außen gezahntes Zahnrad (14, 16), das an dem exzentrischen Abschnitt (8a, 8b) befestigt ist und das in Verbindung mit einer exzentrischen Drehung des exzentrischen Abschnitts (8a, 8b) schwingt und sich dreht, während es mit den Innenzähnen (3) verzahnt;
einen Träger (4), der mit der Getriebewelle (104) verbunden ist, die in einer Axialrichtung des äußeren Zylinder (2) durch das äußere Abdeckelement geht und in den äußeren Zylinder (2) eingepasst ist, und der sich um eine Achse des äußeren Zylinders (2) in Bezug auf den äußeren Zylinder (2) dreht, indem er eine Drehkraft des außen gezahnten Zahnrads (14; 16) aufnimmt; und
ein erstes Trägerlager (7), das den Träger (4) innerhalb des äußeren Zylinders (2) in Bezug auf den äußeren Zylinder (2) hält, so dass der Träger (4) um die Achse des äußeren Zylinders (2) drehbar ist, wobei
das erste Trägerlager (7) einen ersten inneren Ringabschnitt (7a), der auf den Träger (4) aufgesetzt ist und der um die Achse des äußeren Zylinders (2) integral mit dem Träger (4) drehbar ist, einen ersten äußeren Ringabschnitt (7b), der in den äußeren Zylinder (2) eingepasst ist und der um die Achse des äußeren Zylinders (2) integral mit dem äußeren Zylinder (2) drehbar ist, und ein erstes Rollenelement (7c), das zwischen dem ersten inneren Ringabschnitt (7a) und dem ersten äußeren Ringabschnitt (7b) drehbar angeordnet ist, hat,
**dadurch gekennzeichnet, dass** die Getriebevorrichtung (1) mit exzentrischer Schwingung ferner ein zweites Trägerlager (6) umfasst, das den Träger (4) innerhalb des äußeren Zylinders (2) in Bezug auf den äußeren Zylinder (2) hält, so dass der Träger (4) um die Achse des externen Zylinders (2) drehbar ist, wobei
das zweite Trägerlager (6) einen zweiten inneren Ringabschnitt (6a), der auf den Träger (4) aufgesetzt ist und der um die Achse des externen Zylinders (2) integral mit dem Träger (4) drehbar ist, einen zweiten äußeren Ringabschnitt (6b), der in den äußeren Zylinder (2) eingepasst ist und der um die Achse des äußeren Zylinders (2) integral mit dem äußeren Zylinder (2) drehbar ist, und ein zweites Rollenelement (6c), das drehbar zwischen dem zweiten inneren Ringabschnitt (6a) und dem zweiten äußeren Ringabschnitt (6b) angeordnet ist, hat,
der äußere Zylinder (2) in einem Zustand, in dem der äußere Zylinder (2) koaxial mit dem äußeren Abdeckelement (106) angeordnet ist, fest an dem äußeren Abdeckelement (106) montiert ist,
die Getriebewelle (104) in Bezug auf das äußere Abdeckelement (106) durch zwei Getriebelager (108), die in dem äußeren Abdeckelement (106) angeordnet sind, drehbar gehalten wird,
eine erste Lücke, in der das erste Rollenelement (7c) in einer Radialrichtung des äußeren Zylinders (2) beweglich ist, zwischen dem ersten inneren Ringabschnitt (7a) und dem ersten äußeren Ringabschnitt (7b) ausgebildet ist, so dass der Träger (4) zusammen mit dem ersten inneren Ringabschnitt (7a) in der Radialrichtung des äußeren Zylinders (2) beweglich ist, und
eine zweite Lücke, in der das zweite Rollenelement (6c) in einer Radialrichtung des äußeren Zylinders (2) beweglich ist, zwischen dem zweiten inneren Ringabschnitt (6a) und dem zweiten äußeren Ringabschnitt (6b) ausgebildet ist, so dass der Träger (4) zusammen mit dem zweiten inneren Ringabschnitt (6a) in der Radialrichtung des äußeren Zylinders (2) beweglich ist.

2. Getriebevorrichtung (1) mit exzentrischer Schwingung gemäß Anspruch 1, wobei
der Träger (4) mit der Getriebewelle (104) gekoppelt ist und zusammen mit der Getriebewelle (104) gedreht wird.

3. Getriebevorrichtung (1) mit exzentrischer Schwingung nach Anspruch 1 oder 2, wobei
das erste Trägerlager (7) ein Schrägkugellager ist, das in einer derartigen Weise aufgebaut ist, dass der erste innere Ringabschnitt (7a) und der erste äußere Ringabschnitt (7b) betriebsfähig sind, um das erste Rollenelement (7c), das zu einer kugelförmigen Form ausgebildet ist, sowohl in der Radialrichtung als auch einer Axialrichtung des äußeren Zylinders (2) zu halten, und
das zweite Trägerlager (6) ein anderes Schrägkugellager ist, das in einer derartigen Weise aufgebaut ist, dass der zweite innere Ringabschnitt (6a) und der zweite äußere Ringabschnitt (6b) betriebsfähig sind, um das zweite Rollenelement (6c), das zu einer kugelförmigen Form ausgebildet ist, sowohl in der Radialrichtung als auch einer Axialrichtung des äußeren Zylinders (2) zu halten.

4. Getriebevorrichtung (1) mit exzentrischer Schwingung nach Anspruch 3, wobei
das erste Rollenelement (7c) einen derartigen Durchmesser hat, dass das erste Rollenelement (7c) zwischen dem ersten inneren Ringabschnitt (7a) und dem ersten äußeren Ringabschnitt (7b) in der Radialrichtung des äußeren Zylinders (2) beweglich ist, und
das zweite Rollenelement (6c) einen derartigen Durchmesser hat, dass das zweite Rollenelement (6c) zwischen dem zweiten inneren Ringabschnitt (6a) und dem zweiten äußeren Ringabschnitt (6b) in der Radialrichtung des äußeren Zylinders (2) beweglich ist.

5. Verfahren zur Herstellung einer Getriebevorrichtung (1) mit exzentrischer Schwingung, die versehen ist mit: einem äußeren Zylinder (2), der mit einem äußeren Abdeckelement (106) verbunden ist und der eine Innenoberfläche hat, die mit mehreren Innenzähnen (3) versehen ist, einer Kurbelwelle (8), die in dem äußeren Zylinder (2) angeordnet ist, und die einen exzentrischen Abschnitt (8a, 8b) hat, einem außen gezahnten Zahnrad (14, 16), das an dem exzentrischen Abschnitt (8a, 8b) befestigt ist, einem Träger (4), der mit der Getriebewelle (104) verbunden ist, die in einer Axialrichtung des äußeren Zylinder (2) durch das äußere Abdeckelement geht und in den äußeren Zylinder (2) eingepasst ist und einem ersten Trägerlager (7), das den Träger (4) innerhalb des äußeren Zylinders (2) in Bezug auf den äußeren Zylinder (2) hält, so dass der Träger (4) um eine Achse des äußeren Zylinders (2) drehbar ist, wobei das erste Trägerlager (7) einen ersten inneren Ringabschnitt (7a), der auf den Träger (4) aufgesetzt ist, einen ersten äußeren Ringabschnitt (7b), der in den äußeren Zylinder (2) eingepasst ist, und ein erstes Rollenelement (7c), das zwischen dem ersten inneren Ringabschnitt (7a) und dem ersten äußeren Ringabschnitt (7b) angeordnet ist, umfasst, wobei die Getriebevorrichtung in einer derartigen Weise aufgebaut ist, dass das außen gezahnte Zahnrad (14, 16) in Verbindung mit einer Drehung des exzentrischen Abschnitts (8a, 8b) der Kurbelwelle (8) schwingt und sich dreht, während es mit den Innenzähnen (3) verzahnt, und dass der Träger (4) sich in Bezug auf den äußeren Zylinder (2) dreht, indem er eine Drehkraft des außen gezahnten Zahnrads (14, 16) empfängt, wobei das Verfahren umfasst:
einen ersten Montageschritt zum Montieren des Trägers (4), des äußeren Zylinders (2) und des ersten Trägerlagers (7) aneinander in einer derartigen Weise, dass das erste Trägerlager (7) zwischen dem Träger (4) und dem äußeren Zylinder (2) eingeschoben wird,
**gekennzeichnet durch**
einen zweiten Montageschritt zum Montieren des zweiten Trägerlagers (6), das den Träger (4) innerhalb des äußeren Zylinders (2) hält, in Bezug auf den äußeren Zylinder (2), so dass der Träger (4) in einer derartigen Weise um die Achse des äußeren Zylinders (2) drehbar ist, dass das zweite Trägerlager (6) zwischen dem Träger (4) und dem äußeren Zylinder (2) eingeschoben wird,
wobei
das zweite Trägerlager (6) einen zweiten inneren Ringabschnitt (6a), der auf den Träger (4) aufgesetzt ist, einen zweiten äußeren Ringabschnitt (6b), der in den äußeren Zylinder (2) eingepasst ist, und ein zweites Rollenelement (6c), das zwischen dem zweiten inneren Ringabschnitt (6a) und dem zweiten äußeren Ringabschnitt (6b) angeordnet ist, umfasst,
der Träger (4), der äußere Zylinder (2) und das Trägerlager (6, 7) in einer derartigen Weise aneinander montiert werden, dass der äußere Zylinder (2) in einem Zustand, in dem der äußere Zylinder (2) koaxial mit dem äußeren Abdeckelement (106) angeordnet ist, fest an dem äußeren Abdeckelement (106) montiert wird,
die Getriebewelle (104) in Bezug auf das äußere Abdeckelement (106) durch zwei Getriebelager (108), die in dem äußeren Abdeckelement (106) angeordnet sind, drehbar gehalten wird,
in dem ersten Montageschritt eine erste Lücke, in der das erste Rollenelement (7c) in einer Radialrichtung des äußeren Zylinders (2) beweglich ist, zwischen dem ersten inneren Ringabschnitt (7a) und dem ersten äußeren Ringabschnitt (7b) ausgebildet wird, so dass der Träger (4) zusammen mit dem ersten inneren Ringabschnitt (7a) in der Radialrichtung des äußeren Zylinders (2) beweglich ist, und
in dem zweiten Montageschritt eine zweite Lücke, in der das zweite Rollenelement (6c) in einer Radialrichtung des äußeren Zylinders (2) beweglich ist, zwischen dem zweiten inneren Ringabschnitt (6a) und dem zweiten äußeren Ringabschnitt (6b) ausgebildet wird, so dass der Träger (4) zusammen mit dem zweiten inneren Ringabschnitt (6a) in der Radialrichtung des äußeren Zylinders (2) beweglich ist.

## Revendications

1. Dispositif d'engrenage à oscillation excentrique (1) pour faire tourner un arbre de transmission (104) par rapport à un élément de recouvrement externe (106) à une vitesse de rotation obtenue en réduisant une vitesse de rotation d'entrée à un rapport de vitesse de rotation prédéterminé, comprenant :
un cylindre externe (2) qui est connecté à l'élément de recouvrement externe (106) et qui a une surface interne pourvue d'une pluralité de dents internes (3) ;
un vilebrequin (8) qui a une portion excentrique (8a, 8b) et qui tourne autour d'un axe du vilebrequin (8) au sein du cylindre externe (2) par une force rotative qui est entrée vers le vilebrequin (8) ;
un engrenage à dents externes (14, 16) qui est relié à la portion excentrique (8a, 8b) et qui oscille et tourne en association avec une rotation excentrique de la portion excentrique (8a, 8b) tout en s'engrenant avec les dents internes (3) ;
un support (4) qui est connecté à l'arbre de transmission (104) passant à travers l'élément de recouvrement externe dans une direction axiale du cylindre externe (2) et ajusté dans le cylindre externe (2), et qui tourne autour d'un axe du cylindre externe (2) par rapport au cylindre externe (2) en recevant une force rotative de l'engrenage à dents externes (14, 16) ; et
un premier palier de support (7) qui supporte le support (4) au sein du cylindre externe (2) par rapport au cylindre externe (2) de sorte que le support (4) peut tourner autour de l'axe du cylindre externe (2), dans lequel le premier palier de support (7) a une première portion annulaire interne (7a) qui est ajustée sur le support (4) et qui peut tourner autour de l'axe du cylindre externe (2) de manière intégrante avec le support (4), une première portion annulaire externe (7b) qui est ajustée dans le cylindre externe (2) et qui peut tourner autour de l'axe du cylindre externe (2) de manière intégrante avec le cylindre externe (2), et un premier élément de rouleau (7c) qui est disposé à rotation entre la première portion annulaire interne (7a) et la première portion annulaire externe (7b),
**caractérisé en ce que** le dispositif d'engrenage à oscillation excentrique (1) comprend en outre un second palier de support (6) qui supporte le support (4) au sein du cylindre externe (2) par rapport au cylindre externe (2) de sorte que le support (4) peut tourner autour de l'axe du cylindre externe (2), dans lequel le second palier de support (6) a une seconde portion annulaire interne (6a) qui est ajustée sur le support (4) et qui peut tourner autour de l'axe du cylindre externe (2) de manière intégrante avec le support (4), une seconde portion annulaire externe (6b) qui est ajustée dans le cylindre externe (2) et qui peut tourner autour de l'axe du cylindre externe (2) de manière intégrante avec le cylindre externe (2), et un second élément de rouleau (6c) qui est disposé à rotation entre la seconde portion annulaire interne (6a) et la seconde portion annulaire externe (6b),
le cylindre externe (2) est monté de manière fixe à l'élément de recouvrement externe (106) dans un état où le cylindre externe (2) est disposé de manière coaxiale avec l'élément de recouvrement externe (106),
l'arbre de transmission (104) est supporté à rotation par rapport à l'élément de recouvrement externe (106) par deux paliers de transmission (108) disposés dans l'élément de recouvrement externe (106),
un premier espace dans lequel le premier élément de rouleau (7c) est mobile dans une direction radiale du cylindre externe (2) est formé entre la première portion annulaire interne (7a) et la première portion annulaire externe (7b) de sorte que le support (4) est mobile avec la première portion annulaire interne (7a) dans la direction radiale du cylindre externe (2), et
un second espace dans lequel le second élément de rouleau (6c) est mobile dans une direction radiale du cylindre externe (2) est formé entre la seconde portion annulaire interne (6a) et la seconde portion annulaire externe (6b) de sorte que le support (4) est mobile avec la seconde portion annulaire interne (6a) dans la direction radiale du cylindre externe (2).

2. Dispositif d'engrenage à oscillation excentrique (1) selon la revendication 1, dans lequel
le support (4) est raccordé à l'arbre de transmission (104) et tourné avec l'arbre de transmission (104).

3. Dispositif d'engrenage à oscillation excentrique (1) selon la revendication 1 ou 2, dans lequel
le premier palier de support (7) est un roulement à billes angulaire qui est configuré de telle sorte que la première portion annulaire interne (7a) et la première portion annulaire externe (7b) peuvent opérer pour supporter le premier élément de rouleau (7c), formé en une forme sphérique, à la fois dans la direction radiale et une direction axiale du cylindre externe (2), et
le second palier de support (6) est un autre roulement à billes angulaire qui est configuré de telle sorte que la seconde portion annulaire interne (6a) et la seconde portion annulaire externe (6b) peuvent opérer pour supporter le second élément de rouleau (6c), formé en une forme sphérique, à la fois dans la direction radiale et une direction axiale du cylindre externe (2).

4. Dispositif d'engrenage à oscillation excentrique (1) selon la revendication 3, dans lequel
le premier élément de rouleau (7c) a un diamètre tel que le premier élément de rouleau (7c) est mobile entre la première portion annulaire interne (7a) et la première portion annulaire externe (7b) dans la direction radiale du cylindre externe (2), et
le second élément de rouleau (6c) a un diamètre tel que le second élément de rouleau (6c) est mobile entre la seconde portion annulaire interne (6a) et la seconde portion annulaire externe (6b) dans la direction radiale du cylindre externe (2).

5. Procédé de production d'un dispositif d'engrenage à oscillation excentrique (1) pourvu d'un cylindre externe (2) qui est connecté à un élément de recouvrement externe (106) et qui a une surface interne pourvue d'une pluralité de dents internes (3), un vilebrequin (8) qui est disposé dans le cylindre externe (2) et qui a une portion excentrique (8a, 8b), un engrenage à dents externes (14, 16) qui est relié à la portion excentrique (8a, 8b), un support (4) qui est connecté à un arbre de transmission (104) passant à travers l'élément de recouvrement externe dans une direction axiale du cylindre externe (2) et ajusté dans le cylindre externe (2), et un premier palier de support (7) qui supporte le support (4) au sein du cylindre externe (2) par rapport au cylindre externe (2) de sorte que le support (4) peut tourner autour d'un axe du cylindre externe (2), le premier palier de support (7) incluant une première portion annulaire interne (7a) qui est ajustée sur le support (4), une première portion annulaire externe (7b) qui est ajustée dans le cylindre externe (2), et un premier élément de rouleau (7c) qui est disposé entre la première portion annulaire interne (7a) et la première portion annulaire externe (7b), le dispositif d'engrenage étant configuré de telle sorte que l'engrenage à dents externes (14, 16) oscille et tourne en association avec une rotation de la portion excentrique (8a, 8b) du vilebrequin (8) tout en s'engrenant avec les dents internes (3), et que le support (4) tourne par rapport au cylindre externe (2) en recevant une force rotative de l'engrenage à dents externes (14, 16), le procédé comprenant :
une première étape d'assemblage pour monter le support (4), le cylindre externe (2) et le premier palier de support (7) les uns aux autres de telle sorte que le premier palier de support (7) est interposé entre le support (4) et le cylindre externe (2),
**caractérisé par**
une seconde étape d'assemblage pour monter un second palier de support (6) qui supporte le support (4) au sein du cylindre externe (2) par rapport au cylindre externe (2) de sorte que le support (4) peut tourner autour de l'axe du cylindre externe (2) de telle sorte que le second palier de support (6) est interposé entre le support (4) et le cylindre externe (2),
dans lequel
le second palier de support (6) inclut une seconde portion annulaire interne (6a) qui est ajustée sur le support (4), une seconde portion annulaire externe (6b) qui est ajustée dans le cylindre externe (2), et un second élément de rouleau (6c) qui est disposé entre la seconde portion annulaire interne (6a) et la seconde portion annulaire externe (6b),
le support (4), le cylindre externe (2) et le palier de support (6, 7) sont montés les uns aux autres de telle sorte que le cylindre externe (2) est monté de manière fixe à l'élément de recouvrement externe (106) dans un état où le cylindre externe (2) est disposé de manière coaxiale avec l'élément de recouvrement externe (106),
l'arbre de transmission (104) est supporté à rotation par rapport à l'élément de recouvrement externe (106) par deux paliers de transmission (108) disposés dans l'élément de recouvrement externe (106),
un premier espace dans lequel le premier élément de rouleau (7c) est mobile dans une direction radiale du cylindre externe (2) est formé entre la première portion annulaire interne (7a) et la première portion annulaire externe (7b) dans la première étape d'assemblage de sorte que le support (4) est mobile avec la première portion annulaire interne (7a) dans la direction radiale du cylindre externe (2), et
un second espace dans lequel le second élément de rouleau (6c) est mobile dans une direction radiale du cylindre externe (2) est formé entre la seconde portion annulaire interne (6a) et la seconde portion annulaire externe (6b) dans la seconde étape d'assemblage de sorte que le support (4) est mobile avec la seconde portion annulaire interne (6a) dans la direction radiale du cylindre externe (2).
